# EUROPÄISCHE PATENTANMELDUNG

(11) **EP 1 241 886 A2**
(43) Veröffentlichungstag der Anmeldung: **18.09.2002**
(21) Anmeldenummer: 01106254.4
(22) Anmeldetag: 14.03.2001
(51) Int. Cl.: H04N 7/173, H04N 7/16, H04M 3/487

(54) **Einblendung von kontextgesteuerter Werbung bei der Bild- und Tonwiedergabe**

(71) Anmelder: SIEMENS AKTIENGESELLSCHAFT, 80333 München (DE)
(72) Erfinder: Bock, Gerhard, 82152 Krailling (DE)

(57) **Zusammenfassung**

Die Erfindung betrifft ein Verfahren zur Übertragung von Audio- und/oder Videoinhalten bei einer Kommunikationsverbindung. Erfindungsgemäß sind Mittel zur Spracherkennung vorgesehen, wobei in Abhängigkeit von erkannten Begriffen Audiound/oder Video-Zusatzinformationen eingeblendet werden.

## Beschreibung

Die Erfindung betrifft ein Verfahren gemäß dem Oberbegriff des Patentanspruchs 1 beziehungsweise 2.

Kommunikationsdienste, wie die Telefonie in den Telekomeigenen Netzen oder über das Internet, werden heute fallweise verbilligt. Im Gegenzug wird dem Benutzer von den Providern eingeblendete Werbung angeboten. In Zukunft wird auch der Abruf von Videofilmen aus dem Internet auf Kommunikationsgeräten möglich sein. Auch hier ist eingeblendete Werbung ein Geschäftsfaktor.

In der Regel passt die Werbung nicht zum Inhalt des geführten Gesprächs beziehungsweise zum Inhalt des Films.

Der Erfindung liegt die Aufgabe zugrunde, die eingeblendete Werbung für den Benutzer attraktiver zu gestalten.

Diese Aufgabe wird erfindungsgemäß durch die im Patentanspruch 1 beziehungsweise 2 angegebenen Merkmale gelöst.

Im Folgenden wird die Erfindung anhand eines Ausführungsbeispiels näher erläutert.

Erfindungsgemäß wird bei einer ersten Ausführungsform der Erfindung der Inhalt eines Gesprächs beziehungsweise der Kommunikation berücksichtigt und dazu eine passende Werbung eingeblendet beziehungsweise zu passenden Zeitpunkten eingeblendet. Bei den Telefongesprächen kann hierzu eine Spracherkennung eingesetzt werden, die auf vorbestimmte Schlüsselworte reagiert. Da die Nutzung eines entsprechenden Kommunikationsdienstes freiwillig ist, sollte die Akzeptanz kein großes Problem darstellen.

Bei der Führung einer verbalen Kommunikation oder einer Videokommunikation über ein Kommunikationsnetz wird beispielsweise an einer zentralen Stelle des Netzes eine Spracherkennungseinrichtung installiert, die sprecherunabhängig auf vorbestimmte Worte reagiert. Wenn ein solches Wort in einer Kommunikationsverbindung erkannt wird, so wird in diese eine Audio- oder auch eine Videozusatzinformation eingeblendet. Diese Zusatzinformation kann ein Werbespot sein, der einen Werbetext oder/und Werbebilder enthält.

Bei einer zweiten Ausführungsform der Erfindung wird beispielsweise ein Film aus dem Internet abgerufen. Die zur Zeit entstehende Kontext-Beschreibungsmethode MPEG7 ordnet den einzelnen Filmsequenzen jeweils eine inhaltliche Beschreibung zu. Beim Abruf eines solchen Films über ein Kommunikationsnetz kann wiederum an einer zentralen Stelle diese Beschreibung ausgewertet werden, und in den Datenstrom eine Audiound/oder Video-Zusatzinformation eingeblendet werden. Der Netzbetreiber braucht dabei die auf einem Server gespeicherten MPEG7-Beschreibungen mit den Beschreibungen der eben abgerufenen Videosequenzen zu vergleichen und dementsprechend ein aktuelles Werbeangebot einblenden.

## Patentansprüche

1. Verfahren zur Übertragung von Audio- und/oder Videoinhalten bei einer Kommunikationsverbindung,
**gekennzeichnet durch**
Mittel zur Spracherkennung, wobei in Abhängigkeit von erkannten Begriffen Audio- und/oder Video-Zusatzinformationen eingeblendet werden.

2. Verfahren zum Abruf von Audio- und/oder Videoinhalten, die unter Verwendung einer Kontextbeschreibung der Ton- und/oder Bildsequenzen gespeichert sind, über eine Kommunikationsverbindung,
**dadurch gekennzeichnet dass**
in Abhängigkeit vom Kontext-Audio- und/oder -Video Zusatzinformationen eingeblendet werden.
